## Europäisches Patentamt

## European Patent Office

## Office européen des brevets

(11) Publication number: **0 099 714**
**B1**

(12) **EUROPEAN PATENT SPECIFICATION**

(45) Date of publication of patent specification: **10.09.86**

(51) Int. Cl.⁴: **B 21 D 9/15**

(21) Application number: **83304033.0**

(22) Date of filing: **12.07.83**

(54) Method for bending pipes.

(30) Priority: **14.07.82 GB 8220420**

(43) Date of publication of application:
**01.02.84 Bulletin 84/05**

(45) Publication of the grant of the patent:
**10.09.86 Bulletin 86/37**

(84) Designated Contracting States:
**BE DE FR GB IT NL SE**

(56) References cited:
**DE-A-2 722 824**

(73) Proprietor: **The British Petroleum Company
p.l.c.
Britannic House Moor Lane
London EC2Y 9BU (GB)**

(72) Inventor: **Ells, John William
7 Avenue Road
Bexleyheath Kent (GB)**

(74) Representative: **MacLeod, Malcolm et al
c/o The British Petroleum Company plc Patents
Division Chertsey Road
Sunbury-on-Thames Middlesex, TW16 7LN (GB)**

Courier Press, Leamington Spa, England.

## Description

This invention relates to a method for bending a pipe.

Existing methods of bending pipe, particularly at the site where a pipeline is being laid, involve cold bending a joint of pipe around a former. Typically bends with a radius of between 15 and 40 times the diameter of the pipe are formed to enable the pipeline to negotiate changes in direction and elevation. The radius of curvature need not necessarily be constant along the joint of the pipe since the aim of bends formed on site is more to achieve an angle of turn than a constant radius.

However, when a pipe is bent using the existing methods described above some ovalisation will occur and, particularly where the pipe has a high diameter to wall thickness (D/t) ratio, there is a risk of buckling or wrinkling of the pipe wall. As the D/t ratio increases and/or the bend radius of the former decreases, the amount of ovalisation increases and buckling or wrinkling becomes more likely. This limits the radius to which pipe of a given D/t ratio can be bent.

There are engineering standards stating the maximum degree of ovalisation that is acceptable. For example the relevant Institute of Petroleum standards specify that the ovality should not reduce the diameter of the pipe anywhere by more than $2\frac{1}{2}\%$. Ovalisation can inhibit the movement of pigs through the pipeline. Buckling or wrinkling of the pipe wall is generally considered to be unacceptable by most pipeline codes.

To help reducing ovalisation and the risk of buckling or wrinkling existing techniques involve packing the pipe with sand prior to bending or altenratively using hydraulic expanders within the pipe. Sometimes the pipe is carefully heated to reduce the bending forces and help reduce ovalisation and the risk of buckling or wrinkling.

DE—A1—2,722,824 discloses that straight tubes can be filled with a substantially incompressible fluid such as water, sealed, and afterwards bent into a desired shape over a former.

A method of bending pipe has now been invented in which the degree of ovalisation and the required bending movement have been significantly reduced, without requiring solid packing or the use of a former.

According to the present invention there is provided a method for bending a pipe which method comprises filling the pipe with liquid, capping the ends of the pipe and applying pressure internally to the pipe by means of the liquid wherein the sole bending force is applied to the caps attached to the ends of the pipe and the pipe is bent without the assistance of a former.

The internal pressure generates both hoop and longitudinal stresses which significantly reduce not only the bending moment required to bend the pipe but also the ovalisation and the risk of buckling and wrinkling. Typically internal pressures which generate hoop stresses up to 75% to 110% of the specified minimum yield strength of the pipe material can be applied without affecting the integrity of the pipe.

The required bending moment is applied via rigid plugs or caps fitted to each end of the pipe. These plugs or caps are sufficiently strong to transmit the required bending moment to the pipe. Additionally a seal is provided for containing the liquid. This seal may or may not be an integral part of the plug or cap used to apply the required bending moment.

Insulated pipes, which are required for landlines in cold climatic conditions present a special problem. It is not generally feasible to construct a pipeline and subsequently insulate it. Insulated pipelines are therefore constructed in the field from straight lengths of pipeline which have previously been covered with a layer of insulating material in the factory.

During construction it is of course necessary to bend sections of the line to accommodate ground contours and changes in direction of the pipeline. When sections of insulated pipelines are bent around a former it is inevitable that some damage will be done to the coating. It will undergo compression from which it may or may not recover and there is the risk that the coating may split and possibly sections may become detached.

A method according to the present invention in which the bending moment is applied to end caps and no former is employed is particularly useful in bending insulated pipes without damaging the insulating coating either permanently or temporarily.

Conveniently the liquid is water. Where the ambient temperature is close to or below 0°C, the addition of an additive such as ethylene glycol to the water, or the use of an alternative liquid whose freezing temperature is below the ambient temperature, can be used.

Preferably the internal pressure is controlled so as to be substantially constant during the bending operation. To effect this it may be convenient to supply additional liquid, e.g. by a small pump or pressurised reservoir, during the bending operation.

Conveniently the method can be effected without applying heat to the pipe or using internal hydraulic expanders. Conveniently the reducing bending moment associated with the application of internal pressure in the method permits the apparatus used to cold blend the pipe to be less powerful and hence smaller and easier to handle than the apparatus used with existing methods of cold bending pipe. The method is therefore particularly suited, for example, to bending pipe where site conditions do not allow the use of heat to assist the bending operation. The method can be applied to pipe of any size and of any D/t ratio.

The invention is illustrated with reference to the following example.

### Example

A 2 metre length of stainless steel pipe having a 1.65 mm wall thickness and a 51 mm outside diameter was sealed by welding a cap at each end. A port was tapped in each cap, one for the admission of hydraulic fluid and the other for the release of air. These ports were used to fill the pipe with hydraulic fluid. When all the air had been displaced one port was connected by means of a flexible hose to a pressure gauge and hydraulic pump and the other port was sealed with a suitable plug. The pipe was then mounted in a pipe bending apparatus which was capable of applying a constant bending moment along a 500 mm long central section of the pipe.

Strain gauges were fitted to the pipe to measure the stress in the pipe wall in both the hoop and axial directions over the 500 mm long central section of the pipe.

Internal pressure was then applied to the pipe by means of the hydraulic pump. The internal pressure was raised until a hoop stress equal to 90% of the specified minimum yield stress (SMYS) of the pipe material was generated. Using the pipe bending apparatus a bending moment was then applied and increased in small increments until a constant radius of curvature of approximately 28 times the pipe diameter in the 500 mm long central section of the pipe was reached. The hydraulic pump was used to maintain a constant internal pressure in the pipe throughout the bending operation. After each incremental increase in bending moment the pipe ovality, deflection and bending moment applied were recorded. On completion of the test the bending moment and internal pressure were reduced to zero and the pipe removed from the pipe bending apparatus.

A second 2 metre length of stainless steel pipe having the same wall thickness, diameter and material properties as the first pipe described above was then mounted in the pipe bending rig. Bending moments were then applied in the same way as for the first pipe until a radius of curvature of approximately 28 times the pipe diameter was reached. No internal pressure was applied.

The results of these tests showed that the bending moment required to bend the pipe with an internal pressure sufficient to generate a hoop stress of 90% SMYS was approximately 40% less than that required to bend the pipe with no internal pressure. Furthermore the maximum ovality of the pipe after bending without internal pressure was sufficient to reduce the diameter of the pipe by approximately 5% compared to less than 2% when internal pressure was applied.

This example demonstrates that the method has the advantages of:

(i) reducing the ovalisation of the cross section of the pipe that would otherwise occur in the absence of the internal fluid pressure. The pipe can therefore be bent to a greater curvature when internal pressure is applied.

(ii) reducing the bending moment that would otherwise be required in the absence of the internal pressure.

(iii) it is unnecessary to heat the pipe thereby avoiding changes in metallurgy of the pipe material associated with heating.

### Claims

1. A method for bending a pipe which method comprises filling the pipe with liquid, capping the ends of the pipe and applying pressure internally to the pipe by means of the liquid, characterised by the fact that the sole bending force is applied to the caps attached to the ends of the pipe and the pipe is bent without the assistance of a former.

2. A method according to claim 1 characterised by the fact that the pipe is covered by a layer of insulating material.

3. A method according to either of the preceding claims characterised by the fact that the internal pressure is controlled so as to be substantially constant during the bending operation.

4. A method according to any of the preceding claims characterised by the fact that the applied pressure generates a hoop stress in the range 75% to 110% of the specified minimum yield strength of the pipe material.

### Patentansprüche

1. Rohrbiegeverfahren, bei dem das Rohr mit Flüssigkeit gefüllt wird, die Enden des Rohres mit Kappen verschlossen werden und mittels der Flüssigkeit ein innerer Druck auf das Rohr ausgeübt wird, dadurch gekennzeichnet, daß die einzige Biegekraft auf die an den Enden des Rohres angebrachten Kappen zur Einwirkung gebracht wird und das Rohr ohne Hilfe eines Formers gebogen wird.

2. Verfahren nach Anspruch 1, dadurch gekennzeichnet, daß das Rohr mit einer Schicht aus Isoliermaterial bedeckt ist.

3. Verfahren nach einem der vorhergehenden Ansprüche, dadurch gekennzeichnet, daß der innere Druck so gesteuert wird, daß er während des Biegevorgangs im wesentlichen konstant ist.

4. Verfahren nach irgendeinem der vorhergehenden Ansprüche, dadurch gekennzeichnet, daß der angewandte Druck eine Umfangsspannung in dem Bereich von 75% bis 110% der spezifizierten minimalen Streckfestigkeit des Rohrmaterials erzeugt.

### Revendications

1. Un procédé de cintrage d'un tube, procédé qui comprend le remplissage du tube par un liquide, la fermeture des extrémités du tube et l'application d'une pression à l'intérieur du tube au moyen du liquide, caractérisé par le fait que la seule force de cintrage est appliquée sur les bouchons fixés aux extrémités du tube et que le tube est cintré sans l'assistance d'un gabarit.

2. Un procédé selon la revendication 1, caractérisé par le fait que le tube est recouvert d'une couche de matière isolante.

3. Un procédé selon l'une ou l'autre des revendications précédentes, caractérisé par le fait que la pression interne est contrôlée de façon à rester sensiblement constante pendant l'opération de cintrage.

4. Un procédé selon l'une quelconque des revendications précédentes, caractérisé par le fait que la pression appliquée génère un effort circonférentiel situé dans la gamme allant de 75% à 110% de la limite élastique minimale spécifiée pour la matière du tube.